# EUROPEAN PATENT SPECIFICATION

(11) **EP 2 902 608 B1**
(45) Date of publication and mention of the grant of the patent: **26.12.2018**
(21) Application number: 15152453.5
(22) Date of filing: 26.01.2015
(51) Int. Cl.: F02K 3/062, F02K 3/072, F02C 7/36, F02K 1/66

(54) **AFT SHROUDED GEARED TURBOFAN**
Hinten ummantelter Getriebeturbofan
Turboréacteur à soufflante arrière carénée et système de transmission

(30) Priority: 30.01.2014 US 201461933345 P
(43) Date of publication of application: 05.08.2015
(73) Proprietor: United Technologies Corporation, Farmington, CT 06032 (US)
(72) Inventor: SUCIU, Gabriel L., Glastonbury, CT Connecticut 06033 (US); CHANDLER, Jesse M., South Windsor, CT Connecticut 06074 (US)
(74) Representative: Dehns

(56) References cited:
- GB-A- 1 251 955
- GB-A- 1 338 499
- GB-A- 2 195 712
- US-A1- 2010 135 799

## Description

### BACKGROUND OF THE INVENTION

This application relates to a gas turbine engine, wherein the fan for providing bypass air is mounted aft of a core engine.

Gas turbine engines are known and, typically, include a fan at a forward end of the engine delivering air into a bypass duct as propulsion air and also into a core engine. The air in the core engine is compressed in a compressor and delivered into a combustion section where it is mixed with fuel and ignited. Products of this combustion pass downstream over turbine rotors which, in turn, drive compressor rotors and a fan rotor to rotate.

Traditionally, a turbine rotor has rotated at a single speed with the fan rotor. This has been a limitation on the speed of the turbine rotor as the fan rotor cannot rotate at unduly high speeds. More recently, it has been proposed to include a gear reduction between a fan drive turbine and the fan rotor. This allows the fan rotor to rotate at slower speeds and allows the fan drive turbine rotor to rotate at higher speeds.

In addition, it has been proposed to include propellers driven by a turbine rotor in a gas turbine engine. These propellers have generally not been provided with a shroud and, thus, do not provide bypass air as in a typical geared turbofan engine as described above.

A gas turbine engine having the features of the preamble of claim 1 is disclosed in US 2010/0135799 A1.

A prior art rotor for a fluid flow machine is disclosed in GB 1251955 A3. A prior art gas turbine engine is disclosed in GB 1338499 A. A prior art turbofan gas turbine engine is disclosed in GB 2195712 A.

### SUMMARY OF THE INVENTION

The present invention provides a gas turbine engine as recited in claim 1.

In an embodiment, the pair of fan rotors rotate in opposed directions.

In another embodiment, the core engine includes at least a pair of compressor rotors and at least a pair of turbine rotors. The fan turbine is a third turbine rotor.

In another embodiment, an inlet to the core engine extends axially beyond an upstream end of the outer shroud.

In another embodiment, the pitch change mechanism is operable to change a pitch angle of blades on the fan rotors during normal operational conditions.

In another embodiment, the pitch change mechanism is operable or is also operable to move the fan blades to a thrust reverser position at which they are configured to resist passage of air across the fan blades to provide a thrust reversing function when an associated aircraft is landing.

In another embodiment, the pitch change mechanism is operable to change an angle of the fan blades by more than 90° during movement to a or the thrust reverser position.

In another embodiment, the pitch change mechanism causes a shaft within a rotating housing to rotate to, in turn, change the pitch angle of the fan blades.

These and other features may be best understood from the following drawings and specification.

### BRIEF DESCRIPTION OF THE DRAWINGS

Figure 1 schematically shows a gas turbine engine.
Figure 2 shows a detail of the gas turbine engine.

### DETAILED DESCRIPTION

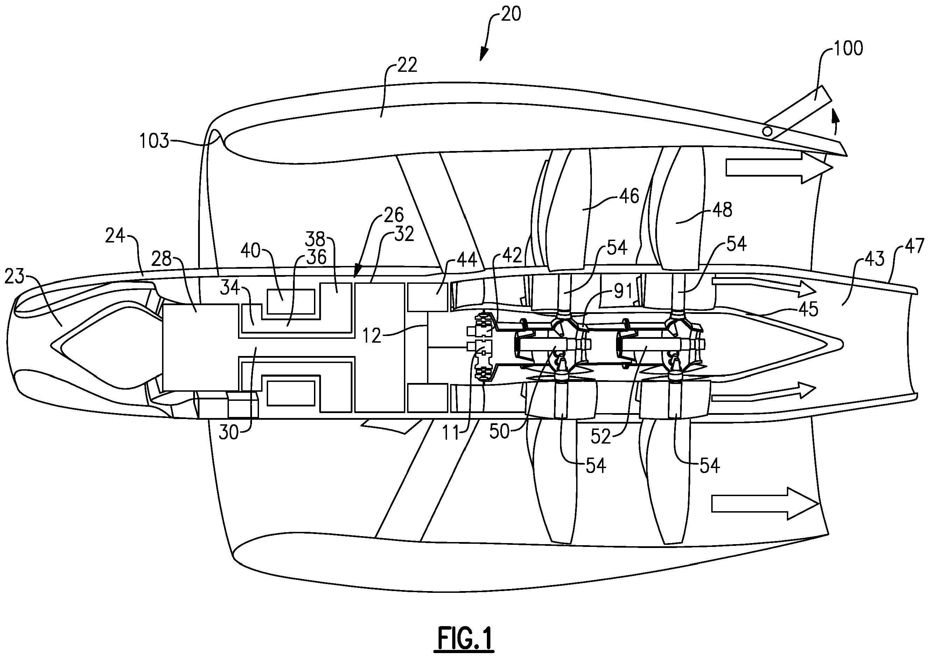

Figure 1 shows a gas turbine engine 20 including an outer shroud 22. Bypass air is driven by a pair of fan rotors 46 and 48 within the shroud 22 and outwardly of the rotating housing 47. A core engine housing 24 is spaced inwardly of the shroud 22. Air passes into an inlet end 23 of the core housing 24 and then into a first compressor rotor 28. The first compressor rotor 28 is driven by a shaft 30 that is, in turn, driven by a low pressure turbine 32. Air from the first stage compressor 28 passes into a second stage compressor 34 which is driven by a shaft 36, in turn, driven by a turbine 38.

The air from the higher stage compressor rotor 34 passes into a combustion section 40 where it is mixed with fuel and ignited. Products of this combustion pass downstream over the turbine rotors 38 and 32 driving them to rotate. Collectively, the elements 28, 30, 32, 34, 36, 38 and 40 could be called a core engine 26. Products of the combustion downstream of the turbine rotor 32 pass over a fan drive turbine 44. The turbine 44 is aft or downstream of the turbine rotor 32. The turbine 44 drives a gear reduction 42 which may be a planetary gear reduction and which, in turn, drives shafts 50 and 52 to rotate the housing 47 and propeller blades 46 and 48. An outer housing 45 defines a core exhaust nozzle 43 with rotating housing 47. Inlet 23 to the core engine extends axially beyond an upstream end 103 of outer shroud 22.

A shell thrust reverser 100 is shown schematically which may pivot outwardly to provide a thrust reversal function when the engine 20 is mounted on an aircraft. The clamshell thrust reverser 100 is provided in outer shroud 22 and is driven radially outwardly to provide a thrust reverser function when an aircraft associated with the gas turbine engine is landing.

The propellers 46 and 48 are provided with pitch change mechanisms 91 that not only allow a slight change in pitch for different operational conditions of the engine 20, but also may allow a dramatic change in the pitch angle for thrust reversal purposes. As an example, while the normal operational pitch change range may be on the order of 10°, the pitch change mechanism may change the pitch angle by greater than 90° and on the order of 120° to provide a thrust reversing function.

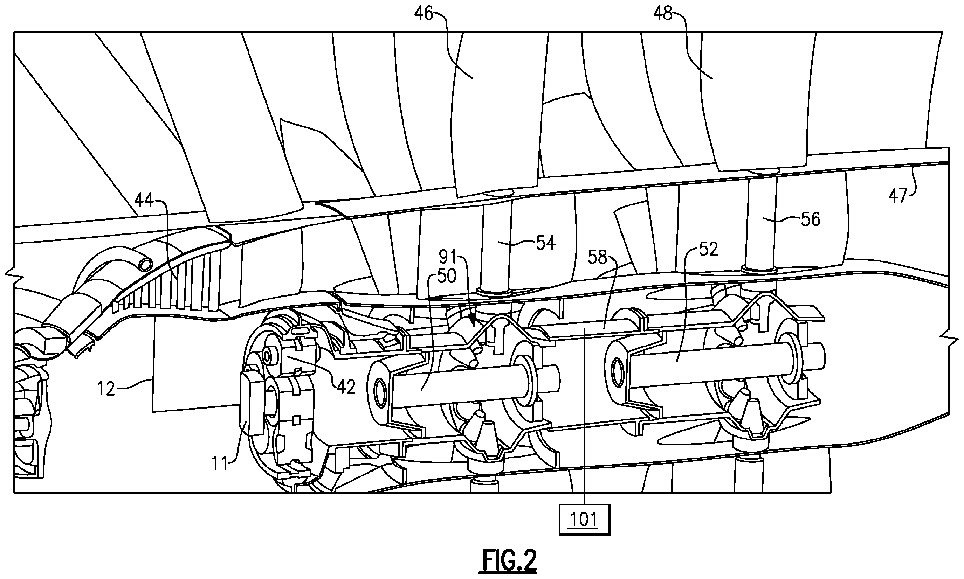

Figure 2 shows details of the pitch change mechanism 91, including a shaft 54, a shaft 56 and the pitch change elements 58, which drive an angle of the shafts 54 and 56 to, in turn, change the angle of the blades 46 and 48.

A control 101 is shown schematically and is operable in conjunction with operation of the engine to actuate the pitch change mechanism 91, not only during operational conditions, but further to drive the propeller blades 46 and 48 to a thrust reversing position when an associated aircraft is landing. That is, the pitch change mechanism 91 also is operable to move fan blades 46/48 to a position at which they will resist passage of air across the fan blades 46/48 to provide a thrust reversing function when an associated aircraft is landing. This thrust reversing function can be utilized in combination with the clamshell thrust reverser 100 as shown schematically in Figure 1.

The propellers 44 and 46 are counter-rotating, meaning they rotate in opposed directions.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
an outer shroud (22);
an inner core housing (24), said inner core housing (24) having a core engine including at least one compressor rotor (28) and at least one turbine rotor (32), and a combustor section (40) intermediate said at least one compressor rotor (28) and said at least one turbine rotor (32);
a fan turbine (44) positioned downstream of said at least one turbine rotor (32),
said fan turbine (44) driving a gear reduction (42) to, in turn, drive fan blades positioned radially inwardly of said outer shroud (22), said fan blades being a pair of axially spaced fan rotors (46,48) mounted aft of the core engine; and
a pitch change mechanism (91) associated with both said axially spaced fan rotors (46, 48); **characterised by** further comprising:
an outer shroud (22), said inner core housing (24) being positioned radially inwardly of said outer shroud (22); and
a thrust reverser which is associated with said outer shroud (22) and which is usable in combination with said pitch change mechanism (91), said thrust reverser (100) being provided in said outer shroud (22) and being configured to be driven radially outwardly to provide a thrust reverser function when an aircraft associated with the gas turbine engine (20) is landing.

2. The gas turbine engine as set forth in claim 1, wherein said pair of fan rotors (46,48) rotate in opposed directions.

3. The gas turbine engine as set forth in claim 1 or 2, wherein said core engine includes at least a pair of compressor rotors (28,34) and at least a pair of turbine rotors (32,38), and said fan turbine (44) being a third turbine rotor.

4. The gas turbine engine as set forth in claim 1, 2 or 3, wherein an inlet (23) to said core engine extends axially beyond an upstream end (103) of said outer shroud (22).

5. The gas turbine engine as set forth in any preceding claim, wherein said pitch change mechanism (91) is operable to change a pitch angle of said fan blades during normal operational conditions.

6. The gas turbine engine as set forth in any preceding claim, wherein said pitch change mechanism (91) is operable or is also operable to move said fan blades to a thrust reverser position at which they are configured to resist passage of air across said fan blades to provide a thrust reversing function when an associated aircraft is landing.

7. The gas turbine engine as set forth in any preceding claim, wherein said pitch change mechanism (91) is operable to change an angle of said fan blades by more than 90° during movement to a or said thrust reverser position.

8. The gas turbine engine as set forth in any preceding claim, wherein said pitch change mechanism (91) causes a shaft (54,56) within a rotating housing (47) to rotate to, in turn, change the pitch angle of the fan blades.

## Patentansprüche

1. Gasturbinentriebwerk (20), Folgendes umfassend:
eine äußere Ummantelung (22);
ein inneres Kerngehäuse (24), wobei das innere Kerngehäuse (24) ein Kerntriebwerk aufweist, das mindestens einen Kompressorrotor (28) und mindestens einen Turbinenrotor (32) beinhaltet, und einen Verbrennungsabschnitt (40), der sich zwischen dem mindestens einen Kompressorrotor (28) und dem mindestens einen Turbinenrotor (32) befindet;
eine Gebläseturbine (44), die stromabwärts von dem mindestens einen Turbinenrotor (32) positioniert ist,
wobei die Gebläseturbine (44) eine Untersetzung (42) antreibt, um wiederum Gebläseschaufeln anzutreiben, die radial nach innen von der äußeren Ummantelung (22) angeordnet sind, wobei die Gebläseschaufeln ein Paar von axial beabstandeten Gebläserotoren (46, 48) sind, die hinter dem Kerntriebwerk montiert sind; und
einen Mechanismus zum Einstellen des Anstellwinkels (91), der beiden axial beabstandeten Gebläserotoren (46, 48) zugeordnet ist; **dadurch gekennzeichnet, dass** es ferner Folgendes umfasst:
eine äußere Ummantelung (22), wobei das innere Kerngehäuse (24) radial nach innen von der äußeren Ummantelung (22) positioniert ist; und
eine Schubumkehrvorrichtung, die der äußeren Ummantelung (22) zugeordnet ist und in Kombination mit dem Mechanismus zum Einstellen des Anstellwinkels (91) verwendbar ist, wobei die Schubumkehrvorrichtung (100) in der äußeren Ummantelung (22) bereitgestellt wird und dazu konfiguriert ist, radial nach außen angetrieben zu werden, um eine Schubumkehrfunktion bereitzustellen, wenn ein Luftfahrzeug, das dem Gasturbinentriebwerk (20) zugeordnet ist, landet.

2. Gasturbinentriebwerk nach Anspruch 1, wobei das Paar von Gebläserotoren (46, 48) in entgegengesetzte Richtungen rotieren.

3. Gasturbinentriebwerk nach Anspruch 1 oder 2, wobei das Kerntriebwerk mindestens ein Paar von Kompressorrotoren (28, 34) und mindestens ein Paar von Turbinenrotoren (32, 38) beinhaltet und die Gebläseturbine (44) ein dritter Turbinenrotor ist.

4. Gasturbinentriebwerk nach Anspruch 1, 2 oder 3, wobei ein Einlass (23) zu dem Kerntriebwerk sich axial über ein stromaufwärtiges Ende (103) der äußeren Ummantelung (22) hinaus erstreckt.

5. Gasturbinentriebwerk nach einem der vorstehenden Ansprüche, wobei der Mechanismus zum Einstellen des Anstellwinkels (91) dazu betrieben werden kann, einen Anstellwinkel der Gebläseschaufeln während normaler Betriebsbedingungen einzustellen.

6. Gasturbinentriebwerk nach einem der vorstehenden Ansprüche, wobei der Mechanismus zum Einstellen des Anstellwinkels (91) dazu oder auch dazu betrieben werden kann, die Gebläseschaufeln in eine Schubumkehrposition zu bewegen, in welcher sie dazu konfiguriert sind, Luftdurchtritt durch die Gebläseschaufeln zu verhindern, um eine Schubumkehrfunktion bereitzustellen, wenn ein zugeordnetes Luftfahrzeug landet.

7. Gasturbinentriebwerk nach einem der vorstehenden Ansprüche, wobei der Mechanismus zum Einstellen des Anstellwinkels (91) dazu betrieben werden kann, einen Winkel der Gebläseschaufeln während einer Bewegung zu einer oder der Schubumkehrposition um mehr als 90° einzustellen.

8. Gasturbinentriebwerk nach einem der vorstehenden Ansprüche, wobei der Mechanismus zum Einstellen des Anstellwinkels (91) eine Welle (54, 56) innerhalb eines rotierenden Gehäuses (47) dazu veranlasst, zu rotieren, um wiederum den Anstellwinkel der Gebläseschaufeln einzustellen.

## Revendications

1. Moteur à turbine à gaz (20) comprenant :
un carénage externe (22) ;
un logement central interne (24), ledit logement central interne (24) ayant un moteur central comportant au moins un rotor de compresseur (28) et au moins un rotor de turbine (32), et une section de chambre de combustion (40) entre ledit au moins un rotor de compresseur (28) et ledit au moins un rotor de turbine (32) ;
une turbine de soufflante (44) positionnée en aval dudit au moins un rotor de turbine (32),
ladite turbine de soufflante (44) entraînant un engrenage réducteur (42) qui entraîne à son tour des pales de soufflante positionnées radialement vers l'intérieur dudit carénage externe (22), lesdites pales de soufflante étant une paire de rotors de soufflante espacés axialement (46, 48) montés à l'arrière du moteur central ; et
un mécanisme de changement de pas (91) associé auxdits deux rotors de soufflante espacés axialement (46, 48) ; **caractérisé en ce qu'**il comprend en outre :
un carénage externe (22), ledit logement central interne (24) étant positionné radialement vers l'intérieur dudit carénage externe (22) ; et
un inverseur de poussée qui est associé audit carénage externe (22) et qui est utilisable en combinaison avec ledit mécanisme de changement de pas (91), ledit inverseur de poussée (100) étant prévu dans ledit carénage externe (22) et étant configuré pour être entraîné radialement vers l'extérieur pour fournir une fonction d'inverseur de poussée lorsqu'un aéronef associé au moteur à turbine à gaz (20) atterrit.

2. Moteur à turbine à gaz selon la revendication 1, dans lequel ladite paire de rotors de soufflante (46, 48) tournent dans des directions opposées.

3. Moteur à turbine à gaz selon la revendication 1 ou 2, dans lequel ledit moteur central comporte au moins une paire de rotors de compresseur (28, 34) et au moins une paire de rotors de turbine (32, 38), et ladite turbine de soufflante (44) étant un troisième rotor de turbine.

4. Moteur à turbine à gaz selon la revendication 1, 2 ou 3, dans lequel une entrée (23) dans ledit moteur central s'étend axialement au-delà d'une extrémité en amont (103) dudit carénage externe (22).

5. Moteur à turbine à gaz selon une quelconque revendication précédente, dans lequel ledit mécanisme de changement de pas (91) est utilisable pour changer un angle de pas desdites pales de soufflante lors de conditions opérationnelles normales.

6. Moteur à turbine à gaz selon une quelconque revendication précédente, dans lequel ledit mécanisme de changement de pas (91) est utilisable ou est également utilisable pour déplacer lesdites pales de soufflante vers une position d'inverseur de poussée à laquelle elles sont configurées pour résister au passage d'air à travers lesdites pales de soufflante pour fournir une fonction d'inversion de poussée lorsqu'un aéronef associé atterrit.

7. Moteur à turbine à gaz selon une quelconque revendication précédente, dans lequel ledit mécanisme de changement de pas (91) est utilisable pour changer un angle desdites pales de soufflante de plus de 90° lors d'un mouvement vers une ou ladite position d'inverseur de poussée.

8. Moteur à turbine à gaz selon une quelconque revendication précédente, dans lequel ledit mécanisme de changement de pas (91) amène un arbre (54, 56) à l'intérieur d'un logement rotatif (47) à tourner pour changer à son tour l'angle de pas des pales de soufflante.
